# EUROPEAN PATENT APPLICATION

(11) **EP 4 763 324 A1**
(43) Date of publication of application: **24.06.2026**
(21) Application number: 24222094.5
(22) Date of filing: 20.12.2024
(51) Int. Cl.: B01J 4/00, B01J 19/24, B01J 19/26

(54) **APPARATUS AND METHOD FOR THE CONTINUOUS PRODUCTION OF LITHIUM FLUORIDE**

(71) Applicant: BUSS ChemTech AG, 4133 Pratteln (CH)
(72) Inventor: Berger, Florian, 79639 Grenzach-Whylen (DE); Hartmann, Veronika, 4058 Basel (CH); Müller, Benedikt, 4123 Allschwil (CH); Kettenbach, Gerhard, 79639 Grenzach-Whylen (DE)
(74) Representative: Bohest AG

(57) **Abstract**

Disclosed is a two step process for preparing lithium fluoride, wherein in a first step lithium carbonate is converted to lithium bicarbonate using gaseous carbon dioxide and in a second step the lithium bicarbonate is converted to lithium fluoride using hydrogen fluoride, wherein the first step is carried out in a Buss loop reactor. The first step may be in batch or continuous mode; the second step is done in continuous mode. Improvements in the Buss loop reactor for performing the process are also disclosed.

## Description

### Introduction

With increasing demand for mobile electrical power storage, the demand for battery materials is increasing. Lithium-ion batteries play a critical role in powering a wide range of applications, from mobile electric devices to electric vehicles. With the growing demand for sustainable and efficient energy sources, the development and scale-up of new battery technologies has become an important area of active research and development. Electric mobility, in particular, has emerged as a key driver for the development of high-performance batteries. The electrification of transportation offers significant benefits such as reduced emissions, improved energy efficiency, and reduced dependence on fossil fuels. However, the widespread adoption of electric vehicles is dependent on the availability of high-performance battery materials on large scale. For the production of lithium-ion batteries lithium hexafluorophosphate (LiPF₆) is an important commodity and an important intermediate in its production in turn is lithium fluoride (LiF).

### Background and prior art

Lithium fluoride can be prepared from various starting materials, and due to its low water solubility precipitates from aqueous solutions. For the preparation of electronics grade lithium fluoride, lithium carbonate frequently serves as the starting material. Lithium carbonate is poorly soluble in water but reacts with a variety of different acids including hydrogen fluoride. The direct reaction with aqueous hydrogen fluoride is challenging, because since the product lithium fluoride is also poorly soluble in water the lithium carbonate particles could coat themselves with lithium fluoride and the core of the particles would not necessarily react entirely.

A known solution to this problem is a two-step process as described e.g. in CN111559750A. In a first step lithium carbonate slurried in water is converted to water soluble lithium bicarbonate (= lithium hydrogencarbonate) using gaseous carbon dioxide. The following equilibria describe the reactions in this first step:

CO₂ (g) 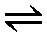 CO₂ (aq)

Li₂CO₃ (s) + H₂O (I) + CO₂ (aq) 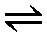 2 LiHCOa (aq)

The dissolution of lithium carbonate by conversion to lithium bicarbonate is slow and becomes slower with increasing particle size of the lithium carbonate or when the concentration of lithium bicarbonate increases or even approaches saturation.

In a second step the solubilized lithium bicarbonate is converted to the lithium fluoride using either gaseous or aqueous hydrogen fluoride. The reaction of this second step is described by the following equation:

LiHCO₃ (aq) + HF (aq) → LiF (s) + H₂O (I) + CO₂ (g)

The only moderate solubility of lithium bicarbonate causes a high consumption of water in such two-step process. Typically about 20 to 30 kg waste water per produced kg of lithium fluoride will be produced.

The above first step has been run so far in batch mode, and the mentioned slowing down of the reaction with carbon dioxide as the concentration of lithium bicarbonate increases is specific for such batch mode. The above second step however has been run either in batch mode or in continuous mode. In the two step process disclosed in CN111559750A the second step is in continuous mode.

The typical reactor used so far for the first batch-mode step of reacting the lithium carbonate suspension with the gaseous carbon dioxide has been a carbonization kettle. This reactor adds carbon dioxide either from the bottom (thus directly into the carbonate suspension) or from the top (thus into the gas phase above the carbonate suspension), in both cases typically also with mechanical agitation of the carbonate suspension. Two examples of a carbonization kettle of the former type are disclosed in CN212284023U and CN117401698A; an example of the latter type is disclosed in CN118122258A.

A known reactor for reacting liquids with gases has been a loop reactor containing a Venturi jet in the reactor. The liquid is looped using the loop through the Venturi jet forming a liquid jet, and the gaseous reactant is sucked by the Venturi jet principle into the liquid jet, thus allowing for an intimate mixing of the liquid with the gas in the reactor. This type of liquid/gas reactor is commonly called the "Buss loop reactor", see e.g. Ullmann's Encyclopedia of Industrial Chemistry, 5th edition, vol. B4, p.173. Its typical applications so far have been alkoxylations, i.e. production of polyalkylene glycols from alkylene oxides and starter alcohols, and hydrogenations. Gas/liquid reactions using the Buss loop reactor could be run either in batch mode or in continuous mode. The continuous mode was desirable specifically in alkoxylations in view of avoiding an excessive volume increase of the reaction mixture (customarily called "growth ratio" or "buildup ratio"), but is generally at the detriment of completeness of conversion from starting material to product.

The present invention seeks to provide an improved two-step process of the above described type.

### Summary of the invention

The present invention thus provides:
[1] A Buss loop reactor comprising a first reactor vessel, characterized in that the first reactor vessel comprises an aqueous medium with particulate lithium carbonate suspended up therein and an internal gas phase comprising carbon dioxide;
[2] A process for producing lithium fluoride comprising the steps of:
   (i) treating a suspension of particulate lithium carbonate in an aqueous medium with a gas phase comprising carbon dioxide to produce lithium bicarbonate dissolved in the aqueous medium; and
   (ii) treating the dissolved lithium bicarbonate with hydrogen fluoride to thereby precipitate the lithium as lithium fluoride and release carbon dioxide from the bicarbonate;
   characterized in that in step (i) a Buss loop reactor as defined in any one of claims 1 to 7 is used to treat the suspension of particulate lithium carbonate with the gas phase comprising carbon dioxide; and
[3] The use of a Buss loop reactor as defined in above [1] for dissolving lithium carbonate suspended in an aqueous medium using carbon dioxide gas.

Preferred embodiments are according to the respective dependent claims.

### Brief description of the figures

- Fig.1: Describes schematically an overall apparatus including a Buss loop reactor for performing the process of the invention
- Fig.2: Describes three designs of the combination of Venturi nozzle and diffusor suitable for the instant invention

### Detailed description of the invention:

The present invention deals with a process for a preferably continuous production of lithium fluoride from lithium carbonate. The process involves two steps, the formation of dissolved lithium bicarbonate and the continuous precipitation of lithium fluoride, following the chemical equations outlined in the introduction. To address the slow dissolution of lithium carbonate in water, a Buss loop reactor is proposed for the first step (i) of converting the lithium carbonate suspension into the lithium bicarbonate solution. In the inventive two-step process the first step (i) using the Buss loop reactor may be run either in batch mode or in continuous mode, the latter is preferred. In the preferred continuous mode either the reactor itself or the loop of the Buss loop reactor are provided with an outlet containing a filter. The increased efficiency of the dissolution step allows the first step (i) to be also performed continuously, while still reaching high conversion from lithium carbonate starting material to lithium bicarbonate product and obtaining a filter permeate in which the lithium is essentially present as lithium bicarbonate. Furthermore, it was found that any solid lithium carbonate that nevertheless accumulates on the filter (whether cross-flow or dead-end) keeps dissolving by the higher concentration of carbon dioxide in the liquid phase obtainable by the Buss loop reactor.

In the present invention lithium carbonate (Li₂CO₃) is used as the starting material. This may already be a so-called "battery grade" (at least 99.5%) lithium carbonate, in which case it may be directly suspended in the aqueous medium. Alternatively, it may be a technical grade lithium carbonate, in which case it may be pre-treated with carbon dioxide to form solubilized lithium bicarbonate, purifying the lithium bicarbonate solution, e.g. by ion exchange, and reprecipitating lithium carbonate by heating the purified lithium bicarbonate solution and thus expelling carbon dioxide. Such pre-purification is however not mandatory as the process of the invention may itself comprise a purification of the intermediate lithium bicarbonate solution by cation exchange (see below).

The lithium carbonate is used and suspended in "particulate" form. For the purposes of the invention this may mean that the lithium carbonate has an 1-200 µm average particle diameter, wherein ≤ 5 vol% the particles have ≥250 µm particle diameter, ≤ 5 vol% of the particles have ≤ 0.5 µm particle diameter, and ≥ 50 vol% of the particles have 1-100 µm particle diameter, wherein such particle size distribution may be measured by laser diffraction, e.g. by a Malvern Mastersizer 2000.

The present invention uses an "aqueous medium" for suspending the particulate lithium carbonate. This may mean water or a mixture containing at least 80% by volume, preferably at least 90% by volume, more preferably at least 90% by volume, based on the mixture, of water and the remainder to 100 % by volume made up by one or more organic cosolvents, provided that the mixture so formed has a dynamic viscosity at 20°C not exceeding 100 times, preferably not exceeding 50 times, the dynamic viscosity of pure water at 20°C (thus about 1 mPa.s). The cosolvent(s) in such mixture may be selected from aliphatic C₁-C₄ alcohols (in particular methanol and ethanol), aliphatic glycols miscible in any volume ratio with water (in particular 1,2-ethanediol and glycerol) and alkylene oxide oligomers miscible in any volume ratio with water and made from ethylene oxide and/or propylene oxide and having 1 to 4 repeating units. The water itself, whether used alone or as a said mixture, is preferably deionized water. Most preferably the employed aqueous medium is deionized water without any of the mentioned cosolvents admixed thereto.

The particulate lithium carbonate is suspended in the aqueous medium in amounts typically ranging from 4 g to 10 g, preferably 5 g to 6 g, per 100 g of the starting aqueous medium or water. The resulting mixture is designated as "suspension of lithium carbonate in the aqueous medium". This suspension preferably has a dynamic viscosity at 20°C not exceeding 4 times, preferably not exceeding 3 times, the dynamic viscosity of the starting aqueous medium. For the purposes of the invention any dynamic viscosities may be determined at 20°C using a Contraves Rheomat RM115 rheometer, using the MS DIN 108 rotor, at shear rate of 200 s⁻¹.

The Buss loop reactor of the invention contains, typically in its reactor top, an internal gas phase comprising carbon dioxide. This may mean that the partial pressure of the carbon dioxide in that internal gas phase may be at least 80%, preferably at least 95%, of the total pressure in the internal gas phase in the first reactor vessel R-1. The remainder of the internal gas phase may be solvent vapors, such as water vapor, air, or inert gases such as nitrogen. Also, an external gas phase comprising carbon dioxide is fed to the first reactor vessel, wherein the same indications as for the internal gas phase may apply.

For the first and the second step specific reactor designs are proposed which enable efficient and continuous reactions. The Buss loop reactor may enable in process step (i) very efficient absorption of a gas into a liquid (see the introduction), but it was now surprisingly found that the Buss loop reactor also makes an excellent choice for dissolving solid lithium carbonate, suspended in water, with gaseous carbon dioxide. It was also surprisingly found that the Venturi-type mixing of gas into the jet is not adversely affected by the fact that the looping and jet-forming medium is no longer a true liquid but a suspension of varying viscosity and may even approach the consistency of a slurry.

Both steps of the entire process can be performed continuously. In the first step (i), the Buss loop reactor is used to overcome the problem of slow mass transfer between gas phase and liquid phase. If particles do not fully dissolve and large particles remain undissolved, these particles can stay in the reactor for longer when the product solution is withdrawn via a crossflow filter. The resulting flow of lithium bicarbonate solution is continuous and free of particles. In the second step (ii), in this continuous variant, no excess of lithium ions is present is the solution and consequently the growth rate of lithium fluoride crystals is high, enabling a continuous process with a short residence time (< 1 h). The quality of crystals formed when precipitating from these slightly acidic conditions is high, so that few liquid inclusions occur, which allows for efficient drying and a low water content in the final product. Water that is trapped in inclusions in crystals or agglomerates can be difficult to remove during the drying step. Consequently, a high crystal quality is advantageous. To achieve a reduced water consumption of the process, much of the mother liquor can be reused. In contrast to previous methods, the pH of the mixture is maintained between 3 and 6, preferably between 4 and 5, so that no large excess of hydrogen fluoride is present. Consequently, the neutralization with ammonia is not necessary, and the resulting mother liquor contains less fluoride, so that the mother liquor can be reused.

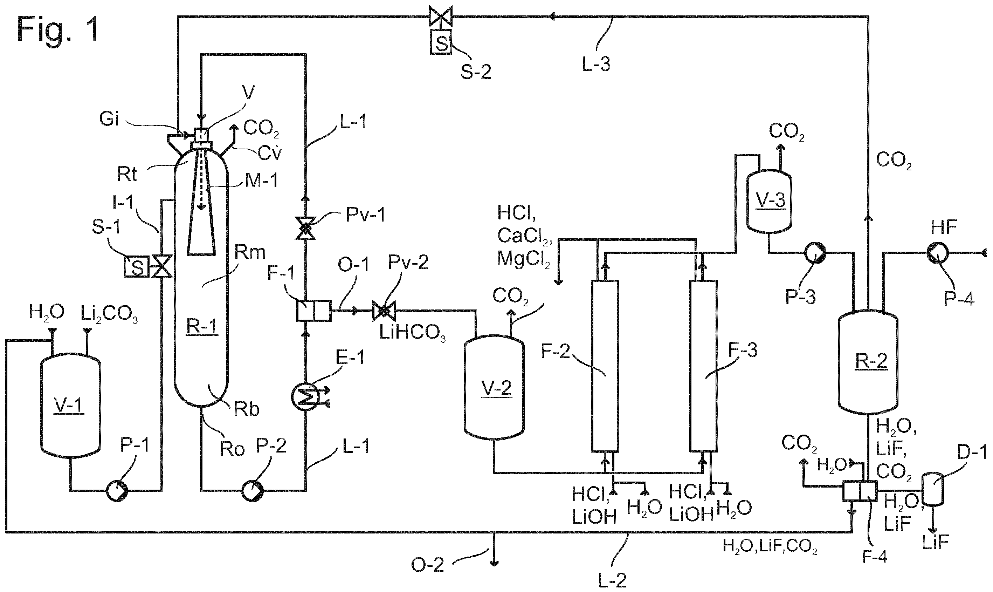

The construction of the Buss loop reactor employed in the first step (i) is in the simplest embodiment entirely conventional. More specifically it may comprise, with reference to Fig. 1, typically a first reactor vessel R-1 comprising a reactor top Rt in which the internal gas phase is typically present and a reactor bottom Rb in which, at least, the particulate lithium carbonate suspended in the aqueous medium is present, and a reactor outlet Ro. The first reaction vessel R-1 typically has the shape of a cylinder with (at least) approximately hemispherical front surfaces. In operation in the process of the invention the first reactor vessel R-1 is normally arranged vertically, so that there is an upper hemispherical front surface and a bottom hemispherical front surface. The reactor portion formed by the upper hemispherical front surface may then be considered the" reactor top" Rt, the reactor portion formed by the lower hemispherical front surface may then be considered the "reactor bottom" Rb, and said cylinder, typically providing the main volume of the first reactor vessel R-1, may be considered as a "reactor main part". The first reaction vessel R-1 typically has a total internal volume of 0.02 m³ to 40 m³, preferably of 0.05 m³ to 20 m³, wherein typically 60 to 90 vol% of that total volume is provided by the reactor main part and the remainder, at preferably about equal volume fractions, by the reactor top Rt and the reactor bottom Rb.

This more specific Buss loop reactor furthermore comprises a gas inlet Gi which is connected to a gas source R-2 and is configured for receiving an external gas phase from the gas source R-2. It furthermore comprises a first circulation loop L-1 being in fluid connection with the reactor outlet Ro. The first circulation loop L-1 in turn comprises a Venturi nozzle V, a jet mixer M-1 in fluid connection with the with Venturi nozzle V; and a first circulation pump P-2 configured for looping the aqueous medium with lithium carbonate suspended therein through the circulation loop L-1 from the reactor outlet Ro to the Venturi nozzle V and to the jet mixer M-1. The Venturi nozzle V is configured for mixing by the Venturi effect the external and/or internal gas phase and the looped aqueous medium with lithium carbonate suspended therein, and the jet mixer M-1 is configured for re-injecting the mixture so produced as a jet into the first reactor vessel (R-1), to close the circulation loop.

In most cases, although it is not considered essential or mandatory, the first circulation loop L-1 may also comprise a heat exchanger E-1, configured for cooling the looping aqueous medium. This heat exchanger E-1 is preferably downstream of the first circulation pump P-2.

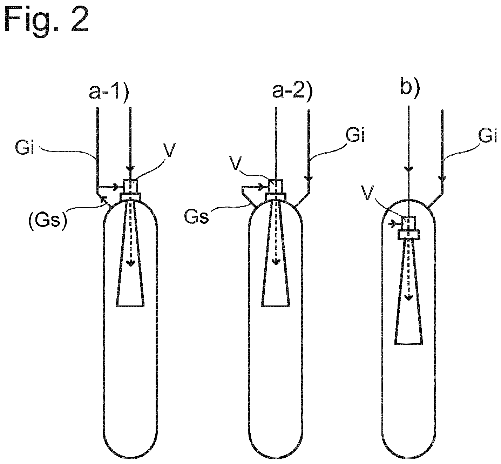

With reference to Fig.2, the Venturi nozzle V may be either outside the first reactor vessel R-1 or in the first reactor vessel, whereas the jet mixer M connected to the Venturi nozzle V is normally always in the first reactor vessel R-1. The jet mixer M, sometimes also called a "diffusor", is also typically arranged vertically, at the bottom of the Venturi nozzle, and typically has a frusto-conical shape becoming wider towards the bottom. It acts as a secondary mixer by slowing down the gas/liquid mixture ejected from the Venturi nozzle. The shear forces so produced bring about an additional mixing of the gas into the liquid. The bottom outlet of the jet mixer may be above the level of the Li₂CO₃ suspension in the first reactor but preferably it is immersed into that level which produces a yet further mixing of gas and liquid.

For the combination of Venturi nozzle V, jet mixer M and gas inlet Gi there are three specific preferred embodiments, with reference to Fig. 2:
a-1) The Venturi nozzle V is outside the first reactor vessel R-1 and the gas inlet Gi is connected to that Venturi nozzle and is configured for feeding the external gas phase directly thereto. Optionally furthermore a gas shunt Gs may be provided that is connected to the reactor top Rt and the gas inlet Gi (or directly to the Venturi nozzle) and is configured for receiving internal gas phase from the reactor top Rt and for feeding the received internal gas phase to the gas inlet Gi (or to the Venturi nozzle). The Venturi nozzle V then receives both the external gas phase comprising carbon dioxide and internal gas phase also comprising carbon dioxide. This embodiment, including said optional gas shunt Gs, is the preferred embodiment for the purposes of the invention and is also shown in Fig.1.
a-2) The Venturi nozzle V is outside the first reactor vessel R-1 and the gas inlet Gi is connected to the reactor top Rt and thus feeds the external gas phase directly to the reactor top Rt. In order to nevertheless feed carbon dioxide to the Venturi nozzle V there is also a mandatory gas shunt Gs that is connected to the reactor top Rt and the Venturi nozzle and is configured for receiving internal gas phase from the reactor top Rt and for feeding the received internal gas phase to the Venturi nozzle.
b) The Venturi nozzle is inside the first reactor vessel R-1, typically in the part of the first reactor vessel that is filled with gas, thus the reactor top Rt; and the external gas phase is fed to the first reactor vessel R-1, more specifically to the reactor top Rt, by a gas inlet Gi connected to the reactor vessel R-1 or more specifically to the reactor top Rt. Here the Venturi nozzle is configured for receiving the internal gas phase from the reactor top Rt by having one or more openings that allow for some interior gas phase to be drawn from the reactor interior volume into the Venturi nozzle V. This third embodiment is the one that would in the prior art normally have been used in hydrogenations and can be used unchanged in the instant invention.

In the simplest embodiment the Buss loop reactor of the invention is as generally known, e.g. from hydrogenations, except that it contains the suspension of lithium carbonate in the aqueous medium as a liquid phase and an internal gas phase comprising carbon dioxide. At least the reactor bottom is filled by the Li₂CO₃ suspension at least to such an extent and level that it covers the circulation loop outlet, to ensure that during the looping of the liquid the first circulation loop is, and remains, filled with Li₂CO₃ suspension and not with internal gas phase. Preferably the entire reactor bottom is filled with the suspension and more preferably also at least a part of the reactor main part; such as 30 to 70 vol% of the internal volume of the reactor main part, also to allow for the jet mixer to be immersed into the suspension (see below).

The simplest embodiment of the process of the invention is that in its first step (i) the Buss loop reactor, as described above, is operated as generally known, but by looping the suspension of lithium carbonate in the aqueous medium through the circulation loop while subjecting it with the Venturi jet mixer to carbon dioxide present in the internal gas phase and being provided as an external gas phase from an external gas source. The first circulation loop comprises a first circulation pump to enable the looping of the lithium carbonate suspension and drives the lithium carbonate suspension through the circulation loop to the Venturi nozzle and then to the jet mixer. This flow direction within the first circulation loop also defines the term "downstream" as used herein in the context of the ordering sequence of elements within the first circulation loop.

In these simplest embodiments of the process of the invention, the above described Buss loop reactor is used in process step (i) either in batch mode, until essentially all lithium carbonate is dissolved by carbon dioxide into soluble lithium bicarbonate, following which the aqueous medium with dissolved lithium bicarbonate is discharged from the first reactor vessel in a manner analogous to a batch alkoxylation as mentioned in the introduction. Alternatively, the Buss loop reactor may be used in a continuous mode step (i), in a manner analogous to a continuous mode catalytic hydrogenation with a Buss loop reactor, as has been previously known, see e.g. "Fette, Seifen, Anstrichmittel", 84, 1st special issue, pp. 511-515 (1982), Fig. 6 and associated description.

A first inventive improvement of this Buss loop reactor that makes it particularly suitable for use in the process of the invention is, also with reference to Fig. 1, a crossflow filter F-1 in the first circulation loop L-1, that crossflow filter allowing to split off from the first circulation loop L-1 a fraction of the looping aqueous suspension of lithium carbonate as a permeate into a first outlet O-1. The crossflow filter F-1 typically has a suited mesh size to retain the particulate (see above) lithium carbonate. Particular embodiments of the crossflow filter F-1 are plate-and frame or tubular filters, being preferably made as steel meshes or ceramic membranes. In this embodiment, yet devoid of any valves in the first circulation loop L-1 and the first fluid outlet O-1, the crossflow filter F-1 purely acts in crossflow mode. The crossflow filter F-1 is preferably downstream of the first circulation pump P-2 so that this pump also acts to drive the lithium carbonate suspension through the crossflow filter F-1.

If in this first inventive improvement of the Buss loop reactor the heat exchanger E-1 is also present, then it is preferably downstream of the first circulation pump P-2 but upstream of the crossflow filter F-1, as shown in Fig. 1. This allows to impart the looping aqueous medium with suspended lithium carbonate and dissolved lithium bicarbonate a desired temperature prior to the filtration, thus allowing to influence the filtration result of the crossflow filter F-1 over solubilities of these components, these solubilities being temperature-dependent.

With this first inventive improvement in the Buss loop reactor, in the process of the invention, wherein the first step (i) is in continuous mode, the crossflow filter F-1 continuously splits off some of the aqueous medium, containing dissolved lithium bicarbonate, from the first circulation loop L-1 into the first fluid outlet O-1, while retaining suspended lithium carbonate in crossflow within the looping aqueous medium, thus preventing lithium carbonate deposits on (fouling of) the crossflow filter F-1.

The inventive two step process of lithium fluoride production from lithium carbonate may be in continuous mode or in batch mode in the first step (i) and/or in the second step (ii). In a preferred embodiment it is in continuous mode in both the first step (i) and the second step (ii).

The first step (i) of the inventive process may generally be run in batch mode. Hereto, with reference to Fig. 1, a given amount of suspension of lithium carbonate in the aqueous medium as a liquid phase may be prepared beforehand in a separate reactor vessel V-1 and a desired amount thereof is fed into the first reactor vessel R-1 over a fluid inlet I-1 of the Buss loop reactor. This fluid inlet I-1 may be connected to the first reactor vessel R-1 (as shown in Fig.1) or it may be connected to the first circulation loop L-1. If the separate reactor vessel V-1 is at a hydrostatically lower level than the first reactor vessel R-1 then such feeding may be done by a feed pump P-1. Alternatively, if the separate reactor vessel V-1 is at a hydrostatically higher level than the first reactor R-1 then such feeding may be done by gravity, using only a valve, such as the first solenoid valve S-1, as a dosing means. With the first solenoid valve S-1 closed and the feed pump P-1 causing the aqueous medium with suspended lithium carbonate to loop through the first circulation loop L-1, an external gas phase comprising carbon dioxide is fed into the first reactor vessel R-1 to the gas inlet G-1, or directly into the reactor top Rt of the first reactor vessel R-1. The gas feeding may be continued either as a batch feed, until a desired overpressure is achieved in the internal gas phase in the first reactor vessel R-1, or continuously. In the former case the feeding of external gas phase would be cut off after reaching said overpressure in the internal gas phase, using the second solenoid valve S-2 as closing means. In the latter case feeding of external gas phase would go on for as long as carbon dioxide was consumed by the suspension of lithium carbonate in the first reactor vessel R-1, using the second solenoid valve S-2 as dosing means. The consumption of carbon dioxide could be monitored by a pressure gauge inside the first reactor vessel R-1, in particular arranged in its reactor top Rt. The completion of the reaction of lithium carbonate with carbon dioxide could be ascertained by visible detection of disappearance of particulate lithium carbonate or by the end of carbon dioxide consumption. Once this reaction is complete, the first plug valve Pv-1 is closed and the second plug valve Pv-2 is opened, while the first circulation pump P-2 keeps on pumping the aqueous medium. That aqueous medium, now essentially a solution of lithium bicarbonate, is then forced by the first pump P-2 through the first filter F-1, acting here in dead-end mode, and is withdrawn therefrom as a permeate into the first outlet O-1. The filtered permeated aqueous solution of lithium bicarbonate may be transferred for intermediate storage into a storage vessel V-2, or directly used in the second step (ii) of the process of the invention.

Preferably however the first step (i) of the inventive process is in continuous mode, also with reference to Fig.1. That is, both the aqueous medium with suspended lithium carbonate and carbon dioxide are continuously fed to the first reactor vessel R-1 over the fluid inlet I-1 and the gas inlet Gi respectively, and the aqueous medium containing lithium bicarbonate is continuously withdrawn from the Buss loop reactor. In order to have a noticeable concentration of lithium bicarbonate in the aqueous medium it may be preferable here to initially add lithium carbonate suspension at a lower rate, such that the mole number of added lithium carbonate per time unit is lower than the mole number of carbon dioxide consumed by the aqueous medium in the first reactor vessel (and accordingly also the same lower rate is used for withdrawing aqueous medium from the first reactor vessel R-1). The first step (i) may even be initially run in batch mode as described above, until such noticeable lithium bicarbonate concentration is achieved in the first reactor vessel R-1, following which the first step (i) is switched to continuous mode.

In the continuous mode of the first step (i), firstly, the rate at which suspension of lithium carbonate is added to the first reactor vessel (in kg/h) plus the rate at which carbon dioxide is absorbed (in kg/h) must be, at least on average, equal to the rate at which the permeated aqueous medium containing dissolved lithium bicarbonate is filtered off from the first circulation loop (also in kg/h), to maintain a constant level of suspension within the first reactor vessel R-1. "On average" may mean that the two rates are each recorded over time, e.g. in time steps of one second, and the rate values so obtained during a certain period of time, such as one minute, for the feed rate are averaged to obtain the averaged feed rate. Analogously the rate values so obtained during a certain period of time, such as one minute, for the permeate rate are averaged to obtain the averaged permeate rate. It is easily possible to re-adjust these average values on the fly by removing from the rate values list considered for averaging the oldest rate value and to add thereto a most recent rate value, typically also in the same time steps as the for the sampling of the individual rate values. This usually called a "first in first out" (FIFO) value array; FIFO array lists are even available as built-in object types in modern programming languages. Each average value is then re-calculated on the fly from the respective rate value array list so updated, which allows to maintain constantly updated average values. An automated system will typically adjust the rate of lithium carbonate suspension added to the first reactor vessel R-1, by adjusting the debit of the second pump P-1 and/or the opening setting of a first solenoid valve S-1 shown in Fig. 1, based on a calculated difference between the average values of feed rate and permeate rate, each updated on the fly. Ideally the reactor R-1 is also equipped with a sensor for monitoring the filling height of the reactor. If the filling height increases, the rate of withdrawing permeate is increased or the feed of lithium carbonate suspension is reduced or a combination thereof. If the filling height of R-1 decreases, the rate of withdrawing permeate is reduced or the feed of lithium carbonate is increased or a combination thereof.

In such continuous mode of the first step (i), secondly, an 1:1 stoichiometric molar ratio of carbon dioxide introduced from the external gas phase and lithium carbonate introduced over the fluid inlet I-1 would in principle be needed. The mole number of lithium carbonate introduced per time unit into the first reactor vessel R-1 over the fluid inlet I-1 (in mol/h) will be known from the above mentioned averaged feed rate of the lithium carbonate suspension and the total volume concentration of lithium carbonate (particulate plus dissolved lithium carbonate) contained therein, which total volume concentration is known from the initial suspending of the lithium carbonate in the separate reactor vessel V-1. In order to avoid unknown total concentration changes in the suspension due to sedimentation of particulate lithium carbonate in the separate reactor vessel V-1 this vessel will typically be of the stirred tank type, with stirring of the suspension contained therein maintained while continuously feeding the lithium carbonate suspension into the first reactor vessel R-1. On the other hand, a mole number of carbon dioxide introduced per time unit could in principle be obtained from a known partial pressure of carbon dioxide in the external gas phase and the flow rate in which the external gas phase is introduced into the first reactor vessel R-1, using either the ideal gas equation or the Van der Waals equation. It is however typically not necessary to introduce an exactly stoichiometric amount of carbon dioxide; typically a molar excess of carbon dioxide with respect to lithium carbonate will be introduced. Any excess carbon dioxide not continuously consumed in the conversion from lithium carbonate to lithium bicarbonate may be continuously vented from the reactor top Rt to the environment over a carbon dioxide vent Cv shown in Fig.1. Such venting of excess carbon dioxide is essential when the two step process of the invention is run in carbon dioxide recycling mode (see below).

For the first step (i), whether in batch or in continuous mode, the following process parameters are appropriate:
a) the partial pressure of the carbon dioxide in the internal gas phase (that is, the pressure of the carbon dioxide when the internal gas phase is essentially pure carbon dioxide) is in the range of 0 to 10 bar over atmospheric pressure (barg), preferably in the range of 1 to 4 bar over atmospheric pressure (barg);
b) The internal temperature of the first reactor vessel, thus also of the aqueous medium containing the suspended lithium carbonate, is maintained at a value in the range of from - 5°C to +30 °C, preferably of 0°C to +20°C. This may be achieved primarily by the first heat exchanger E-1 preferably present in the first circulation loop L-1 (see above), but other heating/cooling means, such as a heating or cooling jacket, may be provided on the first reactor vessel itself.

For the first step (i) specifically in continuous mode the residence time, defined as the ratio of volume of aqueous medium with suspended lithium carbonate in the first reactor vessel (in I) to feed rate (or "averaged" feed rate, see above) of lithium carbonate suspension (in l/h), is in the range of 0.1 to 3 h, preferably of 0.5 to 1 h.

In a yet further improvement, the first circulation loop L-1, further to said first filter F-1, also contains a first valve, preferably a first plug valve, Pv-1, downstream of the crossflow filter F-1, and furthermore the first outlet O-1 also contains a second valve, preferably a second plug valve, Pv-2.

With this further improved reactor design, both a continuous and a batch mode first step (i) can be performed.

For the continuous mode first step (i) with that further improved Buss loop reactor, both first and second valves are open so that the crossflow filter F-1 again acts as crossflow filter. This is analogous to the previous preferred embodiment with the crossflow filter F-1 present but with no extra valves.

However for the batch mode first step (i) with that further improved Buss loop reactor, the first and second valves are configured or operated such that either the first valve Pv-1 is open, thus allowing flow to pass through the first circulation loop L-1, and simultaneously the second valve Pv-2 is closed, thus preventing flow through the first outlet O-1, or vice versa. Namely for the filling of the first reactor vessel R-1 with lithium carbonate suspension and for reacting the suspension with carbon dioxide until completion of the reaction, the first valve is open to allow unhindered looping of the suspension through the first circulation loop L-1; whereas the second plug valve Pv-2 is simultaneously closed to prevent any aqueous medium from leaving the Buss loop reactor over the first fluid outlet O-1. After completion of the reaction the settings of the valves are inverted: The first valve Pv-1 is closed, thus blocking flow through the first circulation loop L-1, and the second Pv-2 is opened, thus allowing flow through the first outlet O-1. With the first circulation pump still running, the aqueous medium, which after completion of the batch reaction should contain essentially dissolved lithium carbonate and essentially no more particulate lithium carbonate, is forced through the crossflow filter F-1, now acting in dead end mode, to pass the aqueous medium with dissolved lithium bicarbonate as permeate into the first outlet O-1.

In the second step (ii) of the inventive process the aqueous medium containing lithium bicarbonate is mixed with a (typically stoichiometric) amount of hydrogen fluoride, preferably as an aqueous solution, in a second reactor vessel R-2, such as a stirred tank reactor. The addition of an aqueous solution of HF is less exothermic than the addition of pure hydrogen fluoride. Compared to the addition of other fluorides such as ammonium fluoride, the use of hydrogen fluoride has the advantage of not introducing additional components.

The second step (ii) may be run in batch mode. There is nothing special to mention here. The reaction mixture is stirred at a desired temperature, typically in the range of 5 to 30°C and preferably at about room temperature, until an apparent completion of the reaction of lithium bicarbonate and hydrogen fluoride is observed, for example by monitoring pH, conductivity or refractive index of the aqueous medium, wherein essential constancy of the measured parameter means end of the reaction. Following the completion of the reaction precipitated lithium fluoride may be isolated from the mixture by a filtration or centrifugation.

Preferably however the second step (ii) of the inventive process is run in continuous mode. To achieve a high quality of lithium fluoride crystals, the continuous process mode for the crystallization is preferred. The crystallization of lithium fluoride is performed continuously in a stirred tank. Both reactants, the lithium bicarbonate solution and the hydrogen fluoride, preferably as aqueous solution, are added continuously. This reactor design allows that in the liquid phase the reaction mixture is always stoichiometric, allowing for fast growth of the lithium fluoride crystals even at a short residence time. In this continuous variant, both the concentrations of the reactants and the pH may be controlled and kept constant. Preferably no excess of lithium ions is present is the solution and no large excess of hydrogen fluoride is present either, that is, the ratio of the molar concentrations of lithium and fluoride, [Li⁺]/[F⁻], is preferably kept in a range from 0.95 to 1.05, even more preferably in a range of 0.99 to 1.01. Furthermore, both the absolute concentrations of the reactants and the pH of the mixture can be maintained essentially constant and within ranges optimal for forming a crystalline lithium fluoride precipitate. Water that is included in the lithium fluoride precipitate, such as in defect-containing crystals, can be difficult to remove during the drying step. Consequently, a lithium fluoride precipitation in the form of high quality crystals is desirable.

It has been found that an optimal pH for high quality lithium fluoride crystallization in the second step (ii) is in the range from 3 to 6, preferably from 4 to 5 and more preferably from 4 to 4.5. The preferred way to control the pH within such range is the use of a pH electrode, such as a glass electrode, inside the second reactor vessel, immersed into the aqueous medium therein.

In a continuous mode second step (ii), the filtering off of the lithium fluoride precipitate is also done in continuous manner, as depicted in Fig. 1 by a separation filter F-4. There are three examples of a continuously operated separation filter F-4:
1) A setup with two or more customary parallel dead end filters, wherein at least one of these is in filtering mode and at least one or more of the remaining ones are cleaned from the lithium fluoride deposit. A suited setup of piping and automated valves may allow to automatically switch a given dead end filter from filtering mode to cleaning, once e.g. the back pressure ahead of the filter exceeds a given threshold value, or the permeate flow drops below a given threshold value.
2) A rotary disk filter. This is a filter that has a disk-shaped filter membrane having several angular filtrating sectors each of a given, same angle. The filter is run in dead end filtering mode using a given filtrating sector until that sector becomes excessively clogged with lithium fluoride. The excessive clogging is again detected, e.g. by the permeate flow dropping below a threshold value. An axial motor then rotates the disk-shaped filter membrane by the angle corresponding to the angle of the filtrating sector, so that the angular filtration sector next to the clogged angular sector becomes the filtrating sector; while the clogged sector taken out of the filtration is subject to cleaning from the lithium fluoride deposit. This is a known type of continuous filter.
3) A continuous centrifuge. This has a perforated drum, similar to the perforated drum of a washing machined, with perforations sufficiently small to hold back the lithium fluoride. The drum is oriented horizontally. While in rotating, centrifuging mode, the aqueous medium with suspended lithium fluoride is continuously added into the rotating drum. The centrifugal force forces the aqueous medium through the perforations, while the lithium fluoride sticks to the drum. A scraper is mounted in the inside of the drum and is configured to continuously scratch the lithium fluoride deposit from the drum interior surface, typically from an apical portion of that interior surface. The lithium fluoride deposit scraped off the surface is continuously funneled out of the rotation drum through a central opening thereof. This is also a known type of continuous filter.

Also with reference to Fig. 1, any lithium fluoride precipitate separated by the separation filter F-4 is then dried in a dryer D-1. Such dryer may dry the lithium fluoride precipitate at room temperature or elevated temperature, such as at 100°C to 150°C. The dryer may employ ambient pressure or reduced pressure, such as 1 mbar to 1 bar total pressure. More preferred is a drying at reduced pressure and elevated temperature, e.g. in the foregoing range.

If in the second step (ii) the pH and the residence time are kept within the above preferred ranges then there should be no significant excess of soluble fluoride, such as in the form of hydrogen fluoride. Accordingly no neutralization of the permeate of the separation filter F-4 is necessary. Nevertheless a neutralization step with ammonia may be done if desired, although such neutralization is not preferred as a contamination with ammonium fluoride would result, which is undesirable particularly if the permeate of the separation filter F-4 is to be re-used in the preparation of lithium carbonate (see below).

Most important, it was found that, when in the first step (i) a total lithium carbonate concentration (particulate plus dissolved) in the initial suspension is chosen which is within the preferred range indicated above in the discussion of the first step (i), that first step (i) is run in continuous mode, and the residence times are as outlined above, then the aqueous medium permeated from the crossflow filter F-1 has a concentration of dissolved lithium bicarbonate which makes the permeate suitable for direct use in the second step (ii) also in continuous mode, without need for further concentration or dilution. It is important to note that the continuous crystallization allows a crystallization of lithium fluoride from a solution which does not contain excessive quantities of lithium bicarbonate, which sets the continuous crystallization process apart from other methods which demand the addition of hydrogen fluoride into a solution of lithium bicarbonate. To our delight it was found that the crystallization of LiF from a solution that does not contain excessive lithium bicarbonate allows for faster crystal growth and results in an improved crystal quality. Consequently, the continuous crystallization process allows a process with shorter residence time (< 1 h) and higher crystal quality. The preferred residence time of the reaction mixture in the second reactor vessel R-2, wherein "residence time" is defined as the ratio of volume of that reaction mixture to feed flow of aqueous medium containing lithium bicarbonate into the second reactor vessel R-2, is in the range of 0.2 to 5 h, preferentially of 0.5 to 1 h. The quality of crystals formed when precipitating from these slightly acidic conditions is high, so that few liquid inclusions occur, which allows for efficient drying and a low water content in the final product. This optimum concentration of lithium bicarbonate obtained in the permeate from the crossflow filter F-1 can be passed essentially unchanged through the optional but preferred cation exchange purification of the permeate (see below), as only minor amounts of non-lithium cations need to be replaced by lithium cations thereby.

Irrespective of whether the first (i) and second (ii) steps are run in batch or in continuous mode an intermediate purification of the aqueous medium containing dissolved lithium bicarbonate by cation exchange may be carried out. The lithium bicarbonate solution can be purified with ion exchangers, before the lithium fluoride is precipitated through the addition of hydrogen fluoride. This purification may be done prior to use of that permeate in the second step (ii) to remove many non-lithium cations, such as Ca, Mg, Fe, or Cu contained as impurities in the lithium bicarbonate solution. Many divalent metal cations, in particular magnesium and calcium, may form fluorides of lower solubility than lithium fluoride and might thus be enriched with respect to lithium in the final fluoride precipitate. These cations can be replaced by lithium cations by passing the solution through a cation exchanger in lithium form. The process of the invention thus preferably employs a cation exchange on the aqueous medium containing dissolved lithium bicarbonate from the first step (i) (that is, if the crossflow filter is present, the permeate from that crossflow filter) and prior to use of that aqueous medium in second step (ii). As the cation exchange resin either strong (e.g. sulfonate-containing) or weak (e.g. carboxylic-containing) resins may be used; preferred are however cation exchange resins the are selective for multivalent cations, such as those having iminodiacetic acid or aminophosphonic acid groups. Exchange resins of the latter types are commercialized by e.g. by Rohm & Haas under the trade names Amberlite IRC or by Lanxess under the trade name Lewatit. The cation exchangers are used in the lithium form, so that foreign cations are exchanged for lithium. If a continuous production of cation exchanger-purified aqueous medium with dissolved lithium bicarbonate is sought, as would be preferable for a continuously run second step (ii), then the cation exchanger is preferably used in the form of two parallel columns, designated in Fig.1 with reference symbols F-2 and F-3. As shown in the figure with appropriate connections at these columns, alternatively one of these two columns would be used in the exchange, whereas the other one would be regenerated. Once the exchanging column is exhausted, it is switched to regeneration, whereas the other one, regenerated, is switched to exchanging operation. This design with two parallel columns with alternating exchange operation and regeneration is as such known in the art.

The regeneration of the cation exchanger(s) may be done by an initial exchange of the absorbed non-lithium cations by H⁺ using a strong acid such as HCl, because H⁺ has the highest affinity in particular to the above mentioned multivalent cation-selective exchanging groups, followed by water washing and a neutralization using aqueous lithium hydroxide solution or lithium bicarbonate solution to re-convert the ion exchanger to the regenerated lithium form. In this case the regenerated resin may retain, not as exchanged ions but as part of the resin matrix, traces of acidity. When contacted with the lithium bicarbonate aqueous medium small amounts of free carbonic acid may be formed thereby, which may subsequently be removed from the cation exchanger eluate by a subsequent gas-liquid reaction vessel V-3 as shown in Fig.1.

To achieve a reduced water consumption of the overall process, preferably the filter permeate from the separation filter F-4 of step (ii) is recycled in the preparation of the suspension of lithium carbonate in aqueous medium in the suspension vessel V-1, as shown in Fig. 1, over a second circulation loop L-2. This method for recycling the process water is proposed to address the high water consumption of lithium fluoride production as discussed in the introduction. The proposed method not only reduces the water consumption, but also reduces the loss of lithium, saves power for cooling process water, and eliminates the need for ammonia. Mother liquor from the crystallization is reused in the first step (i) of the process, for the dissolution of lithium carbonate. Hereby the consumption of water is reduced and the remaining lithium fluoride that is dissolved in the mother liquor is kept. Furthermore, the recycling reduces the demand for cooling, because the mother liquor is already cold from the process (typically < 20 °C) whereas fresh water may need to be cooled before use. Because of the above mentioned near neutral pH range an afterwards neutralization of excess HF with ammonia is not necessary, and that filter permeate (water recyclate) contains less fluoride, so that the filter permeate can indeed be recycled and reused. For such recycling mode the overall system of the invention will typically comprise a second circulation loop L-2 as shown in Fig.1. However, because the HF is preferably added as aqueous solution, the total volume of aqueous medium in the overall system would gradually increase; therefore a fraction of that separation filter permeate to be recycled is removed from the overall system over the second outlet O-2 also shown in Fig. 1, at a rate sufficient to maintain a constant volume of material in the process. It is also possible to discard more of the recyclate and use of combination of fresh water and water recyclate in the preparation of the lithium carbonate suspension in the suspension vessel V-1.

Still furthermore, the carbon dioxide released in the second reaction vessel R-2 may also be recycled into the first reactor vessel R-1 over a third circulation loop L-3 also shown in Fig.3. The second step (ii) releases in the second reaction vessel R-2 two molecules of carbon dioxide per two molecules of lithium bicarbonate being converted to lithium fluoride, however the first step (i) consumes only one molecule of carbon dioxide per two molecules of lithium bicarbonate produced (or per molecule of employed lithium carbonate). That is, the second step (ii) releases more carbon dioxide than what is needed in the first step (i). Therefore, the first reactor vessel R-1, or the third circulation loop L-3, comprise in this process embodiment the carbon dioxide vent Cv shown in Fig. 1, that releases excess carbon dioxide to the environment.

The invention is now further illustrated by the following non-limiting examples.

### Examples:

### Example 1: Batch mode first step (i)

A 50 L Buss loop reactor was cleaned by rinsing with water. A stirred vessel was charged with lithium carbonate (2500 g) and deionized water (50 kg). The solid was suspended in the liquid to afford a colorless suspension. The contents of the stirred vessel were transferred into the loop reactor. The circulation pump of the loop reactor was started. Subsequently, the feed valve for carbon dioxide was opened, resulting in the pressure slowly increasing. After about 0.5 h, the target pressure of 4 bar over atmospheric pressure was reached and the feed valve was closed. No significant decrease in pressure was observed, indicating that the reaction is complete. The reaction mixture was transferred into a storage vessel. No solids were found in the product solution.

### Example 2: Continuous mode first step (i)

A 50 L Buss loop reactor equipped with a cross flow filter is cleaned by rinsing with water. A stirred vessel is charged with lithium carbonate (5000 g) and deionized water (100 kg). The solid is suspended in the liquid to afford a colorless suspension. The loop reactor is filled with 50 L of the contents of the stirred vessel. The circulation pump of the loop reactor is started. Subsequently, the feed valve for carbon dioxide is opened, resulting in the pressure slowly increasing. When the target pressure of 4 bar over atmospheric pressure is reached, additional lithium carbonate suspension is transferred from the stirred vessel into the loop reactor by means of a pump. Simultaneously, the collection of permeate from the cross flow filter at the same rate as the feeding of the lithium carbonate suspension is started.

### Example 3: Continuous mode second step (ii)

The aqueous medium with dissolved lithium bicarbonate obtained from either Example 1 or Example 2 is passed through a cation exchange column containing Lewatit MDS TP 208, Lanxess (with amino and carboxylic acid groups), in lithium form to remove non-lithium cations. The cation exchanger permeate is collected in the depressurization vessel to allow traces of carbon dioxide gas to escape, and is then continuously fed to the second reactor vessel in the form of a stirred tank reactor and having a second carbon dioxide vent. The experimental setup including the design of the second reactor vessel is as depicted in Fig. 1. Aqueous HF solution is also dosed continuously dosed to that second reactor vessel. The second reactor vessel is stirred such as to allow mixing of the dosed lithium bicarbonate and HF solutions. The pH of the mixture is continuously monitored, and the feed rate of hydrogen fluoride solution is adjusted whenever the pH deviates from the desired range of 4 to 4.5. The process parameters for the lithium fluoride precipitation are essentially as described in step (5) of Example 1 of CN11155750A and associated machine translation. A liquid phase rich in the sedimented lithium fluoride is continuously removed from the lower part of the second reactor vessel R-2 and filtered in dead end mode, at a volumetric rate which is the sum of the volumetric feed rates of aqueous medium containing lithium bicarbonate and of aqueous HF. That sediment-rich liquid phase is filtered using a rotary disk filter to allow dead end filtration with concomitant continuous removal of the lithium fluoride filter cake from the filter. The permeate of the rotary disk filter is either discarded or collected for recycling into a first process step (i) as described in either Example 1 or Example 2. The obtained lithium fluoride filter cake is dried using essentially the drying conditions described in step (6) of Example 1 of CN11155750A and associated machine translation.

**Table 1: List of reference symbols**

| Reference symbol | Description |
|---|---|
| V-1 | Suspension vessel |
| P-1 | Feed pump |
| R-1 | First reactor vessel |
| P-2 | First circulation pump |
| V | Venturi nozzle |
| L-1 | First circulation loop |
| Rb | Reactor bottom |
| Rt | Reactor top |
| Gi | Gas inlet |
| Rm | Reactor main part |
| Ro | Reactor outlet |
| I-1 | Fluid inlet |
| Cv | Carbon dioxide vent |
| Pv-1 | First plug valve |
| Pv-2 | Second plug valve |
| S-1 | First solenoid valve |
| S-2 | Second solenoid valve |
| E-1 | Heat exchanger |
| F-1 | Cross flow filter |
| M-1 | Jet mixer |
| O-1 | First fluid outlet |
| V-2 | Depressurization vessel |
| F-2, F-3 | First and second cation exchangers |
| V-3 | Gas-liquid separation vessel |
| P-3 | First transfer pump |
| P-4 | Second transfer pump |
| R-2 | Second reactor vessel |
| F-4 | Separation filter |
| D-1 | Dryer |
| O-2 | Second fluid outlet |
| L-2 | Second circulation loop |
| L-3 | Third circulation loop |

## Claims

1. A Buss loop reactor comprising a first reactor vessel (R-1), **characterized in that** the first reactor vessel (R-1) comprises an aqueous medium with particulate lithium carbonate suspended therein and an internal gas phase comprising carbon dioxide.

2. The Buss loop reactor as claimed in claim 1, wherein the first reactor vessel (R-1) comprises a reactor top (Rt) with the internal gas phase, a reactor bottom (Rb) with the particulate lithium carbonate suspended up in the aqueous medium, and a reactor outlet (Ro), the Buss loop reactor furthermore comprising:
i) a gas inlet (G-1) which is connected to a gas source (R-2) and is configured for receiving an external gas phase from the gas source (R-2);
ii) a first circulation loop (L-1) being in fluid connection with the reactor outlet (Ro) and comprising
ii-1) a Venturi nozzle (V);
ii-2) a jet mixer (M-1) in fluid connection with the with Venturi nozzle (V); and
ii-3) a first circulation pump (P-2) configured for looping the aqueous medium with lithium carbonate suspended therein through the first circulation loop (L-1) from the reactor outlet (Ro) to the Venturi nozzle (V) and to the jet mixer (M-1);
wherein the Venturi nozzle (V) is configured for mixing by the Venturi effect the external and/or internal gas phase and the looped aqueous medium with lithium carbonate suspended therein, and the jet mixer (M-1) is configured for injecting the mixture so produced as a jet into the first reactor vessel (R-1);
wherein both the internal and external gas phases comprise carbon dioxide.

3. The Buss loop reactor as claimed in claim 2, wherein the first circulation loop (L-1) furthermore comprises a heat exchanger (E-1) downstream of the first circulation pump (P-2) and configured for cooling the looped aqueous medium with lithium carbonate suspended therein.

4. The Buss loop reactor as claimed in claim 2 or 3, wherein the Venturi nozzle (V) is either arranged in the first reactor vessel (R-1) or outside the first reactor vessel (R-1); and
a) if the Venturi nozzle (V) is arranged outside the first reactor vessel (R-1), either
a-1) the gas inlet (G-1) is connected to the Venturi nozzle (V) and is configured for feeding the external gas phase to the Venturi nozzle (V); or
a-2) the gas inlet (G-1) is connected to the reactor top (Rt) and is configured for feeding the external gas phase to the reactor top (Rt), and a gas shunt (Gs) is connected to the reactor top (Rt) and to the Venturi nozzle (V), the gas shunt (Gs) being configured for receiving internal gas phase from the reactor top (Rt) and for feeding the received internal gas phase to the Venturi nozzle (V);
or
b) if the Venturi nozzle (V) is arranged in the first reactor vessel (R-1), it is configured for receiving the internal gas phase from the reactor top (Rt) and the gas inlet (G-1) is connected to the reactor top (Rt) and is configured for feeding the external gas phase to the reactor top (Rt).

5. The Buss loop reactor as claimed in any one of claims 2 to 4, furthermore comprising a carbon dioxide vent (Cv) connected to the reactor top (Rt) and configured for releasing excess carbon dioxide from the first reactor vessel (R-1).

6. The Buss loop reactor as claimed in any one of claims 2 to 5, furthermore comprising a fluid inlet (I-1) connected to the first reactor vessel (R-1) and configured for feeding the aqueous medium and the particulate lithium carbonate suspended therein to the first reactor vessel (R-1) and wherein the first circulation loop (L-1) furthermore comprises a crossflow filter (F-1) downstream of the first circulation pump (P-2) and configured for withdrawing from the first circulation loop (L-1) an aqueous medium containing lithium bicarbonate as a filter permeate into a first fluid outlet (O-1), wherein, if the heat exchanger (E-1) is present, the crossflow filter (F-1) is preferably also downstream of that heat exchanger (E-1).

7. The Buss loop reactor as claimed in claim 6, wherein the fluid inlet (I-1) is configured for continuous feeding and the crossflow filter (F-1) and first fluid outlet (O-1) are configured for continuous withdrawing.

8. The Buss loop reactor as claimed in claim 6, wherein the fluid inlet (I-1) is configured for batch wise or continuous feeding and the first circulation loop (L-1) comprises a first valve (Pv-1) downstream of the crossflow filter (F-1) and the first fluid outlet (O-1) comprises a second valve (Pv-2), wherein the first valve (Pv-1) and the second valve (Pv-2) are configured for either simultaneously the first valve (Pv-1) allowing a flow in the circulation loop (L-1) and the second valve (Pv-2) blocking a flow in the first fluid outlet (O-1), or simultaneously the first valve (Pv-1) blocking a flow in the circulation loop (L-1) and the second valve (Pv-2) allowing a flow in the first fluid outlet (O-1).

9. A process for producing lithium fluoride comprising the steps of:
(i) treating a suspension of particulate lithium carbonate in an aqueous medium with a gas phase comprising carbon dioxide to produce lithium bicarbonate dissolved in the aqueous medium; and
(ii) treating the dissolved lithium bicarbonate with hydrogen fluoride to thereby precipitate the lithium as lithium fluoride and release carbon dioxide from the bicarbonate;
**characterized in that** in step (i) a Buss loop reactor as defined in any one of claims 1 to 7 is used to treat the suspension of particulate lithium carbonate with the gas phase comprising carbon dioxide.

10. The process as claimed in claim 9, wherein the Buss loop reactor is as defined in claim 7, wherein the aqueous medium with particulate lithium carbonate suspended therein is continuously fed to the first reactor vessel (R-1) over the fluid inlet (I-1), the aqueous medium with particulate lithium carbonate suspended therein is looped through the first circulation loop (L-1) with the first circulation pump (P-2) and an aqueous medium containing the dissolved lithium bicarbonate is continuously withdrawn from the looped suspension with the crossflow filter (F-1) as a filter permeate over the first fluid outlet (O-1 ).

11. The process as claimed in claim 9, wherein the Buss loop reactor is as defined in claim 8 with the fluid inlet (I-1) being configured for batch wise feeding, the aqueous medium containing dissolved lithium bicarbonate is added as a batch to the first reactor vessel (R-1) over the fluid inlet (I-1), and, with the first valve (Pv-1) allowing the flow in the circulation loop (L-1) and the second valve (Pv-2) blocking the flow in the first fluid outlet (O-1), the aqueous medium with particulate lithium carbonate suspended therein is looped through the first circulation loop (L-1) until a completion of the reaction of the lithium carbonate with the carbon dioxide of step (i), following which, with the first valve (Pv-1) blocking the flow in the circulation loop (L-1) and the second valve (Pv-2) allowing the flow in the first fluid outlet (O-1), the aqueous medium is withdrawn from the first reactor vessel (R-1) using the first circulation pump (P-2) over the circulation loop (L-1) and the crossflow filter (F-1) into the first fluid outlet (O-1) as a filter permeate for use in step (ii).

12. The process as claimed in claim 9, wherein the Buss loop reactor is as defined in claim 8 with the fluid inlet (I-1) being configured for continuous feeding, the aqueous medium containing dissolved lithium bicarbonate is continuously added to the first reactor vessel (R-1) over the fluid inlet (I-1) for reaction with the internal gas phase comprising carbon dioxide in step (i), and, with the first valve (Pv-1) allowing the flow in the circulation loop (L-1) and the second valve (Pv-2) allowing the flow in the first outlet (O-1), the aqueous medium with particulate lithium carbonate suspended therein is looped through the first circulation loop (L-1) using the first circulation pump (P-2), and the aqueous medium is continuously withdrawn from the first reactor vessel (R-1) over the circulation loop (L-1) and the crossflow filter (F-1) into the first outlet (O-1) as a filter permeate for use in step (ii).

13. The process as claimed in any one of claims 9 to 12, wherein the aqueous medium with dissolved lithium bicarbonate obtained in step (i) is passed through a cation exchanger (F-2 or F-3) in lithium form prior to use in step (ii).

14. The process as claimed in anyone of claims 9 to 13, wherein in step (ii) the precipitation of lithium fluoride is done by continuously mixing the aqueous lithium bicarbonate solution and hydrogen fluoride and by continuously filtering off the precipitated lithium fluoride from the mixture, preferably at an essentially 1:1 molar ratio of lithium bicarbonate to hydrogen fluoride, and also preferably wherein the hydrogen fluoride is employed as an aqueous hydrogen fluoride solution.

15. The process as claimed in anyone of claims 9 to 14, wherein the external and internal gas phases are essentially pure carbon dioxide or a mixture of carbon dioxide with air or with an inert gas.

16. Use of a Buss loop reactor as defined in any of claims 1 to 8 for dissolving lithium carbonate suspended in an aqueous medium using carbon dioxide gas.
